# EUROPÄISCHE PATENTSCHRIFT

(11) **EP 2 093 461 B1**
(45) Veröffentlichungstag und Bekanntmachung des Hinweises auf die Patenterteilung: **06.11.2013**
(21) Anmeldenummer: 09001472.1
(22) Anmeldetag: 04.02.2009
(51) Int. Cl.: F16H 47/06, F16H 3/44

(54) **Automatgetriebe mit wenigstens einem Planetensatz**
Automatic drive with at least one planetary gear train
Boîte de vitesses automatique dotée d'au moins un ensemble planétaire

(30) Priorität: 20.02.2008 DE 202008013044 U; 16.10.2008 DE 102008052051
(43) Veröffentlichungstag der Anmeldung: 26.08.2009
(73) Patentinhaber: Voith Patent GmbH, 89522 Heidenheim (DE)
(72) Erfinder: Busch, Jörg, Dr., 89551 Königsbronn-Zang (DE)
(74) Vertreter: Weitzel, Wolfgang

(56) Entgegenhaltungen:
- DE-B- 1 008 590
- DE-C- 975 325
- FR-A- 1 171 377
- US-A- 2 397 634

## Beschreibung

Die Erfindung betrifft ein Automatgetriebe mit wenigstens einem Planetensatz.

Gattungsgemäße Automatgetriebe sind allgemein bekannt. Beispielhaft soll hier auf die DE 20 21 543 A1 verwiesen werden, welche ein kombiniert hydrodynamisch-mechanisches Getriebe für Fahrzeuge mit Teilung der Traktionsleistung mittels eines Differentialgetriebes auf einen Leistungsweg mit einem hydrodynamischen Wandler und einen parallel dazu liegenden mechanischen Leistungsweg und mit einer Zusammenführung der Traktionsleistung auf einen gemeinsamen Leistungsweg beschreibt. Dabei weist das Getriebe mechanische, wahlweise ein- und ausschaltbare Übersetzungsstufen (Gängen) im hydrodynamischen und/oder mechanischen und/oder im gemeinsamen Leistungsweg auf.

Diese so genannten Differentialwandlergetriebe werden im Antrieb von Fahrzeugen verschiedener Art angewandt Dabei werden in einem solchen Getriebe, wie üblicherweise in allen Automatgetrieben, mehrere Planetensätze verwendet. Diese Planetensätze werden in einem vorbestimmten festen Koppelschema miteinander verbunden. Mit Lamellenkupplungen bzw. Lamellenbremsen werden dann die verschiedenen Übersetzungen des Getriebes realisiert. Mit den Lamellen der Kupplungen bzw. Bremsen wird typischerweise erreicht, dass es zu Schaltungen ohne Zugkraftunterbrechung kommt.

Den bekannten vielfältigen Vorteilen dieser Getriebe stehen als Nachteil der hohe Bauteilaufwand von zwei Planetensätzen und drei Kupplungen im Eingangdifferential gegenüber. Außerdem ist die Wandlerbremse im 1. Gang nicht sinnvoll verfügbar, weshalb als Ausweg auf das Bremsen mit den Rückwärtsganglamellen zurückgegriffen wird.

Aus der nächstliegenden Stand der Technik US 2 397 634 A ein Automatgetriebe bekannt, bei dem mittels eines Stellhebels für Wahl zwischen "vorwärts", "neutral" und "rückwärts" eine mit einem Planetengetriebe zusammenwirkende Klauenkupplung betätigt wird. Dabei existiert ein Weg für den Kraftfluss parallel zum Planetengetriebe, über welches hier eine hydrodynamischer Wandler eingebunden wird.

Aus der DE 10 08 590 B ist ein vergleichbarer Aufbau bei einem Wechselgetriebe bekannt. Neben den oben genannten Schaltstellungen "vorwärts", "neutral" und "rückwärts" werden hier auch verschiedene Gangstufen über einen Stellhebel betätig.

Es ist die Aufgabe der hier vorliegenden Erfindung, ein Automatgetriebe dahingehend zu verbessern, dass mit weniger Bauraum und weniger Bauteilen ein vergleichbares Automatgetriebe, insbesondere mit der selben Anzahl an Gängen, oder mit dem selben Bauraum ein optimiertes Automatgetriebe, insbesondere mit einer größeren Zahl an Gängen, ermöglicht wird, welches darüber hinaus einfach ansteuerbar ist.

Erfindungsgemäß wird diese Aufgabe durch die im kennzeichnenden Teil von Anspruch 1 genannten Merkmale gelöst.

Die erfindungsgemäße Idee die Kopplungsstruktur eines Planetensatzes zu ändern, während dieser in einer Gangstufe des Getriebes, in welcher der Kraftfluss ohne Über- oder Untersetzung verläuft, ohne Relativdrehzahl seiner Bauteile als Ganzes umläuft, ohne ein Antriebsmoment zu übertragen, ermöglicht es entweder mit der selben Anzahl an Bauteilen mehr Übersetzungen (Gangstufen) zu realisieren, oder aber die selbe Anzahl an Übersetzungen mit weniger Bauteilen und entsprechend weniger Bedarf an Bauraum umzusetzen. Damit werden die typischen Vorteile der Schaltgetriebe, nämlich die variable Kopplungsstruktur und der einfache Aufbau mit dem großen Vorteil der Automatgetriebe, nämlich dem Schalten ohne Zugkraftunterbrechung verbunden.

Im Vergleich zu Lamellenkupplungen haben Klauenkupplungen den Vorteil, einfache und kostengünstige Bauteile zu sein. Klauenkupplungen haben sich bei Schaltungen mit minimalen Differenzdrehzahlen zwischen den Schaltelementen bewährt. Aber auch bei höheren Differenzdrehzahlen ergeben sich mit Synchronisierungen einwandfreie und schnelle Schaltvorgänge, wenn dabei nicht das Antriebsmoment, sondern nur die Trägheits- und Reibungskräfte übertragen werden müssen. Mit den einfachen und effizient arbeitenden Klauenkupplungen kann daher die Kopplungsstruktur durch die erfindungsgemäßen Hebelelemente einfach und mit wenig Bedarf an Bauraum geändert werden.

Gemäß einer besonders günstigen Weiterbildung der Erfindung ist es vorgesehen, dass die Hebelelemente jeweils aus mehreren Teilelementen aufgebaut sind, welche so miteinander verbunden sind, dass sie in axialer Richtung des Automatgetriebes Kräfte untereinander übertragen, und relativ zueinander um in radialer Richtung drehbeweglich ausgebildet sind.

Der Aufbau der Hebelelemente aus mehreren Teilen weist den entscheidenden Vorteil auf, dass dieser Aufbau eine hohe Flexibilität bei der Konstruktion des Getriebes zulässt. Da die Klauenkupplungen mit dem Planetensatz, dessen Kupplungsstruktur sie ändern, bei ihrer Betätigung umlaufen, sind entsprechende Hebelelemente mit Drehdurchführungen oder scheibenförmige Hebelelemente notwendig, welche entsprechend komplex auszuführen sind. Durch die Aufteilung der Hebelelemente in mehrere Teilelemente wird dieser Aufwand deutlich verringert, da nur noch einzelne Bereiche des Hebelelementes so ausgeführt sein müssen, dass sie die Bewegung unabhängig von der Drehstellung übertragen, während andere Teilelemente deutlich einfacher, leichter und kleiner ausgeführt werden können. Dies bietet nicht nur bei der Ausgestaltung der Hebelelemente entsprechende Vorteile, sondern erhöht auch die Flexibilität in dem Automatgetriebe beziehungsweise dessen Eingangsbereich, da hier durch die flexiblere Gestaltungsmöglichkeit bei den Hebelelementen deutlich mehr Freiheit hinsichtlich der Ausgestaltung der Lagerung des Planetensatzes besteht.

In einer vorteilhaften Ausgestaltung des Automatgetriebes gemäß der Erfindung sind die Hebelelemente dabei aus einem Eingangsbereich des Automatgetriebes herausgeführt. Diese Herausführung aus dem Eingangsbereich des Automatgetriebes ermöglicht es, auf die Hebelelemente zuzugreifen, ohne dass diese Zugriffsstellen im Bereich des Eingangsbereichs liegen und somit mit dem Getriebe umlaufen würden. Dadurch wird die Ansteuerbarkeit der Hebel deutlich vereinfacht.

In einer besonders günstigen Ausgestaltung hiervon sind die Hebelelemente über Aktuatoren betätigbar.

Diese Aktuatoren können in einer besonders vorteilhaften Ausgestaltung dieser Variante dabei dann außerhalb des Eingangsbereichs angreifen und sind so hinsichtlich ihrer Steuerleitungen besonders leicht zugänglich, da diese Leitungen nicht über Drehführungen mit den Aktuatoren zusammenwirken müssen. Grundsätzlich wäre auch ein herausführender Hebel aus dem Gehäuse selbst denkbar, so dass eine Ansteuerung von außerhalb des Gehäuses möglich wäre. Die Integration der Aktuatoren in das Gehäuse jedoch außerhalb des sich drehenden Eingangsbereichs ermöglicht jedoch einen kompakteren Aufbau, welcher im Allgemeinen zu bevorzugen sein wird.

Die Aktuatoren selbst können dabei hydraulisch, pneumatisch, elektrisch oder magnetisch ausgebildet sein. Je nach Bauart des Getriebes und vorhandenen Steuerleitungen kann jeweils eine der genannten Ausführungsarten besondere Vorteile bieten. Es sind jedoch nur vergleichsweise geringe Kräfte zu übertragen, so dass eine große Freiheit besteht, je nach konstruktiven Gegebenheiten eine der genannten Varianten auszuwählen.

In einer besonders vorteilhaften Weiterbildung der Erfindung ist es außerdem vorgesehen, dass die Rückstellung der Klauenkupplungen durch Federelemente realisiert ist. Der Einsatz von Federelementen zur Rückstellung ermöglicht eine deutliche Einsparung an Steuerungsaufwand, da nur in eine Stellrichtungen ein Aktuator oder dergleichen erforderlich ist, da die Federelemente die Rückstellung übernehmen. Außerdem ermöglichen die Federelemente im Falle eines Ausfalls des Steuerungssystems so den Vorteil, dass in solchen Notfällen ein definierter Zustand der Klauenkupplungen vorliegt, so dass diese hinsichtlich des Wiederanfahrens leichter angesteuert werden können, da diese Wiederinbetriebnahme aus einem definierten Zustand heraus erfolgen kann.

Gemäß einer sehr günstigen Weiterbildung hiervon ist es vorgesehen, dass die Federelemente im Bereich der Hebelelemente angeordnet sind, und dass die Klauenkupplungen durch die Federelemente über die Hebelelemente zurückstellbar sind.

Diese Anordnung der Federelemente ermöglicht einen platzsparenden Aufbau, da die Federelemente insbesondere direkt mit den Aktuatoren zusammenwirken können. Dies ermöglicht dann nicht nur eine Rückstellung des Hebelelementes, sondern gleichzeitig auch eine Rückstellung des Aktuators selbst, so dass die oben bereits genannten Vorteile der Federelemente noch besser zur Geltung kommen.

In einer sehr günstigen Weiterbildung der Erfindung ist es ferner vorgesehen, dass jeweils wenigstens zwei Klauenkupplungen durch ein Hebelelement betätigbar sind. Diese Betätigung der wenigstens zwei Klauenkupplungen durch ein Hebelelement ermöglicht es ebenfalls, den Aufwand hinsichtlich Steuerung und Betätigung zu reduzieren. Das Hebelelement kann über einen, oder wenn aufgrund eines umlaufenden Hebelelements mehrere über den Umfang verteilte Aktuatoren sinnvoll sind, um ein Verkippen des Hebelelementes zu vermeiden, über mehrere gleich wirkende Aktuatoren angesteuert werden. Die Betätigung der Klauenkupplungen erfolgt dann über dieses eine Hebelelement. Da typischerweise zwei Klauenkupplungen zum Umschalten der Kupplungsstruktur eines Planetensatzes vorgesehen sind, kann diese Kupplungsstruktur also über ein Hebelelement und damit über einen oder mehrere - dann jedoch zumindest gleich wirkende - Aktuatoren betätigt werden.

In einer vorteilhaften Ausgestaltung der Erfindung ist außerdem eine Synchronisierungseinrichtung vorgesehen, durch welche beim Vorliegen einer Drehzahldifferenz zwischen den über die Klauenkupplungen zu verbindenden oder zu trennenden Teilen eine Verringerung der Drehzahldifferenz erfolgt. Da bei der Änderung der Kupplungsstruktur keine Relativdrehzahlen der Bauteile und damit der Klauenkupplungen untereinander vorliegen, ist typischerweise keine Synchronisierungseinrichtung erforderlich. Es kann jedoch sinnvoll sein, eine solche Synchronisierungseinrichtung für den Notfall vorzusehen, insbesondere dann, wenn in einen Zustand geschaltet wird, welcher nicht dem vorgesehenen Zustand ohne Relativdrehzahl der Bauteile untereinander entspricht. Dies kann beispielsweise der Fall sein, wenn durch einen Ausfall des Steuerungssystems und die oben bereits erwähnte vorteilhafte Ausgestaltung mit einer Rückstellung durch Federkraft eben eine solche Rückstellung durch Federkraft erfolgt. In einem solchen "Notfall" weist die Synchronisierungseinrichtung den entscheidenden Vorteil auf, dass durch sie die Relativdrehzahlen der Bauteile untereinander verringert werden, so dass schnell und einfach in einen definierten Zustand zurückgekehrt werden kann.

In einer besonders günstigen Ausgestaltung kann die Synchronisierungseinrichtung eine Kulissenführung und ein darin laufendes Gegenelement, z.B. einen Stift, aufweisen, wobei sich die Kulissenführung in axialer Richtung des Getriebes erstreckt. Die Kulissenführung oder das Gegenelement ist drehfest mit einem ersten Teil, dessen Drehzahl beeinflusst werden soll, verbunden. Das andere der Elemente, also das Gegenelement oder die Kulissenführung ist mit einem Verbindungselement der beiden Klauenkupplungen verbunden. Dabei ist die Kulissenführung, so ausgebildet, dass eine ungehinderte Bewegung des Gegenelements in axialer Richtung durch die Kulissenführung nur erfolgen kann, wenn die beiden Elemente gegeneinander verdreht werden.

Dieses Verdrehen wird nur eintreten, wenn die zu schaltenden Teile des Planetensatzes eine sehr geringe Drehzahldifferenz gegeneinander aufweisen. Die Kulisse erlaubt es dann, dem Gegenelement durch sie hindurchzugleiten, während vorher durch die Reibung der Drehdurchführung des Verbindungselements der Klauenkupplungen die beiden Drehzahlen aneinander angepasst werden. Durch diese Art der Synchronisierung ist ein einfacher und effizienter Aufbau erreicht. Da die Synchronisierung primär für den Notfall vorgesehen ist, reicht dieser einfache und effiziente Aufbau vollkommen aus, da nicht mit großem Verschleiß oder dergleichen zu rechnen ist.

In einer besonders vorteilhaften Weiterbildung der Erfindung ist es dabei vorgesehen, dass die Kulissenführung in die eine axiale Richtung eine andere Form zur Führung des Gegenelements vorgibt, als in die andere axiale Richtung.

Damit kann dem Gedanken der Synchronisierung im Notfall Rechnung getragen werden. Die eine axiale Richtung in der die Aktuatoren das Hebelelement betätigen und damit typischerweise ebenfalls das Gegenelement durch die Kulissenführung der Synchronisierungseinrichtung bewegen, kann diese so ausgebildet sein, dass eine besonders einfache und zügige Bewegung des Gegenelements durch die Kulisse realisierbar ist. Während die andere Richtung, wenn die Federn das Gegenelement durch die Kulissenführung bewegen, eine deutlich stärkere Synchronisierung durch eine entsprechende Ausgestaltung der Kulisse ermöglicht wird. Dabei ist noch einmal anzumerken, dass die Synchronisierungseinrichtung nur für den Notfall vorgesehen ist, so dass das Gegenelement im Normalbetrieb, wenn die Teile keine Relativdrehzahl zueinander aufweisen, einfach und annähernd reibungsfrei durch die Kulisse gleitet, da eine Zwangsführung des Gegenelements an den Synchronisierungsflächen nur in dem beschriebenen Notfallszenario, wenn eine Relativdrehzahl zwischen den Bauteilen auftritt, zum Tragen kommt.

In einer weiteren besonders günstigen Ausführungsform der Erfindung ist es dabei vorgesehen, dass die Klauenkupplungen über die Hebelelemente direkt oder über Zwischenelemente so mechanisch miteinander verbunden sind, dass die Klauenkupplungen zumindest in einer Richtung ihrer Betätigung in einer vorgegebenen Reihenfolge zueinander schalten.

Beispielsweise kann es gefordert sein, dass die Klauenkupplungen für einen bestimmten Einsatzfall zuerst beide öffnen und dann deutlich und eindeutig nacheinander in der jeweils anderen Stellung schließen, um ein sicheres, definiertes und zuverlässiges Schalten zu gewährleisten. Aufgrund der Integration der Schaltlogik in die mechanische Kopplung kann diese Schaltlogik dabei absolut zuverlässig sichergestellt werden. Unsicherheiten, wie z.B. durch eine getrennte Ansteuerung der beiden Klauenkupplungen können vollständig eliminiert werden.

Weitere vorteilhafte Ausgestaltungen der Erfindung ergeben sich ferner aus den Ausführungsbeispielen, welche nachfolgend anhand der Figuren beispielhaft erläutert werden.

Die Erfindung wird exemplarisch anhand des Eingangsbereichs eines hydrodynamischen-mechanischen Automatgetriebes dargestellt und detailliert erläutert. Die Idee der Erfindung, die Kupplungsstruktur eines Planetensatzes oder auch mehrerer Planetensätze in einem Automatgetriebe über Klauenkupplungen und Hebelelemente zu verändern, während der jeweilige Planetensatz ohne Differenzdrehzahl dreht, ist weder auf den Eingangsbereich noch auf das hydrodynamisch-mechanische Getriebe beschränkt. Die Idee kann analog auch in beliebigen anderen Baugruppen eines beliebigen Automatgetriebes eingesetzt werden, beispielsweise im Ausgangsbereich eines hydrodynamisch-mechanischen Getriebes oder auch im Eingangsbereich oder Ausgangsbereich eines rein mechanischen Automatgetriebes oder automatisierten Schaltgetriebes.

Dabei zeigen:
- Figur 1: in schematisch vereinfachter Darstellung den Grundaufbau eines hydrodynamisch-mechanischen Automatgetriebes nach dem Stand der Technik;
- Figur 2: in schematisch vereinfachter Darstellung den Grundaufbau einer Ausführungsform des Eingangsbereichs und des Wandlers eines hydrodynamisch-mechanischen Automatgetriebes gemäß der Erfindung, in einer ersten Schaltstellung;
- Figur 3: in schematisch vereinfachter Darstellung den Grundaufbau einer Ausführungsform des Eingangsbereichs und des Wandlers des hydrodynamisch-mechanischen Automatgetriebes gemäß der Erfindung, in einer zweiten Schaltstellung;
- Figur 4: in schematisch vereinfachter Darstellung den Grundaufbau einer ersten Ausführungsform des Eingangsbereichs des Automatgetriebes gemäß der Erfindung;
- Figur 5: in schematisch vereinfachter Darstellung den Grundaufbau einer zweiten Ausführungsform des Eingangsbereichs des Automatgetriebes gemäß der Erfindung;
- Figur 6: in schematisch vereinfachter Darstellung den Grundaufbau einer dritten Ausführungsform des Eingangsbereichs des Automatgetriebes gemäß der Erfindung;
- Figur 7: in schematisch vereinfachter Darstellung den Grundaufbau einer alternativen Ausführung zur Ausführungsform gemäß Fig. 4; und
- Figur 8: zwei Darstellung des Details VIII der Fig. 7 in einer Draufsicht.

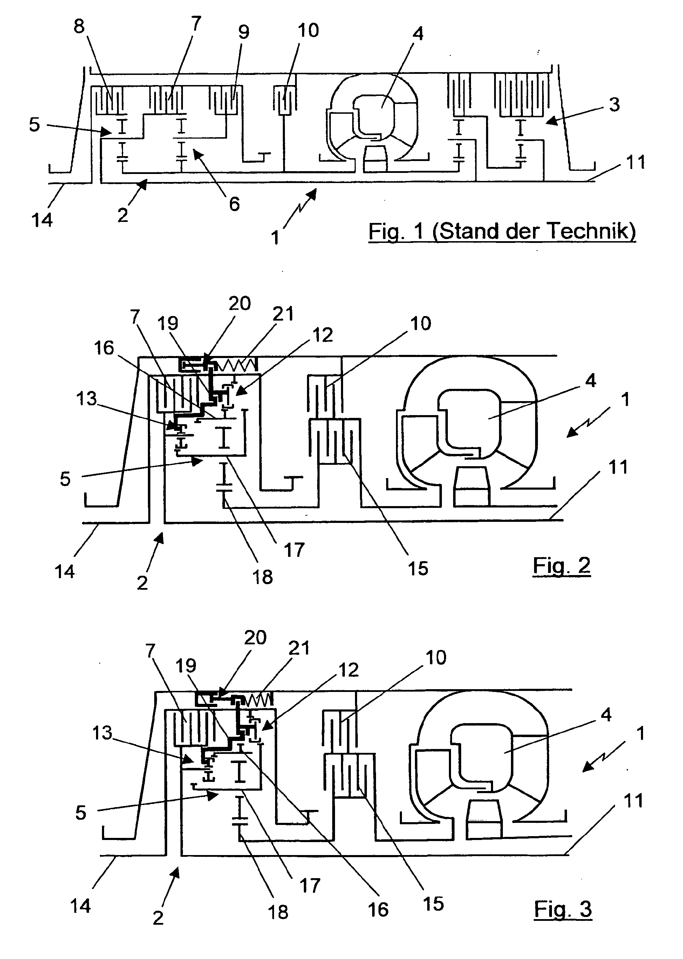

In Figur 1 ist ein typisches hydrodynamisch-mechanisches Automatgetriebe 1 dargestellt. Das Getriebe 1 umfasst dabei einen Eingangsbereich 2, einen Ausgangsbereich 3 und einen hydrodynamischen Wandler 4. Der Eingangsbereich 2 besteht im Allgemeinen aus zwei Planetensätzen 5, 6 drei Kupplungen 7, 8, 9 und einer Bremse 10. Um in der für Automatgetriebe üblichen Art und Weise ohne Unterbrechung der Zugkraft schalten zu können, sind die Kupplungen als Lamellenkupplungen 7, 8, 9 ausgeführt. Die Leistung steht also ohne schaltbedingte Zugkraftunterbrechung am Getriebeausgang 11 zur Verfügung.

Mit dem in Figur 1 dargestellten Vierganggetriebe lassen sich vier Vorwärtsgänge und ein Rückwärtsgang darstellen, wobei die Leistung, wie für hydrodynamisch-mechanische Getriebe üblich, im 1. Gang hydrodynamisch und mechanisch übertragen wird. Mit zunehmender Abtriebsdrehzahl steigt dabei der Anteil der mechanischen Leistungsübertragung zu dem der hydrodynamischen Leistungsübertragung an. Somit lässt sich ein "langer" 1. Gang realisieren, welcher einen hohen Drehzahlbereich abdeckt. In den weiteren drei Gängen wird die Leistung dann rein mechanisch übertragen.

So verläuft durch die Lamellenkupplungen 7, 8, 9 bzw. die Bremse 10 - z.B. im 2. Gang - der Kraftfluss im ersten Planetensatz 5 vom Hohlrad außen zum Steg innen. Damit wird eine Übersetzung ins langsame erreicht. Im 3. Gang verläuft der Kraftfluss direkt, ohne Über- oder Untersetzung, über den Steg bzw. Planetenträger des ersten Planetensatzes 5. Im 4. Gang kommt der zweite Planetensatz 6 zum Einsatz. Durch den Kraftfluss von Steg innen auf das Hohlrad außen kommt es zur gewünschten Übersetzung ins Schnelle.

In Figur 2 ist nun eine mögliche Variante des erfindungsgemäßen Aufbaus in einer ersten Schaltstellung zu erkennen. Dabei ist hier nur der Eingangsbereich 2 sowie der hydrodynamische Wandler 4 dargestellt, der Ausgangsbereich 3 ist nicht noch mal dargestellt, da er für die hier vorliegende Ausführungsform der Erfindung nicht weiter von Interesse ist. Er kann beispielsweise analog dem des Standes der Technik - wie er in Figur 1 dargestellt ist - aufgebaut sein.

Anstelle der beiden Planetensätze 5, 6 reicht hier ein einziger Planetensatz 5 aus. Da eine der Lammellenkupplungen doppelt verwendet wird, kann außerdem eine Lamellenkupplung entfallen. Anstelle des Umschaltens von dem einen Planetensatz 5 auf den anderen Planetensatz, wird hier die Kopplungsstruktur des einen verbliebenen Planetensatzes 5 geändert. Dazu weist der Aufbau gemäß der Erfindung zwei Klauenkupplungen 12, 13 auf.

Der erfindungsgemäße Aufbau erlaubt über die erste Lamellenkupplung 7 (Durchgangskupplung) einen direkten Kraftfluss vom Getriebeeingang 14 zum Getriebeausgang 11. Dies entspricht dem direkten 3. Gang, bei dem im Stand der Technik der Kraftfluss ebenfalls ohne Über- oder Untersetzung, jedoch über den Steg bzw. Planetenträger des ersten Planetensatzes 5 verläuft. Entgegen dem Stand der Technik, läuft der Eingangskorb bestehend aus der zweiten Lamellenkupplung 15 (Pumpenkupplung), dem Hohlrad bzw. Außenkranz 16, dem Planetenträger bzw. Steg 17 und der Sonne 18, welche über die Lamellenkupplung 15 mit der Pumpenwelle des hydrodynamischen Wandlers 4 verbunden ist, im 3. Gang ohne Relativdrehzahl der Bauteile untereinander um. Nun wird die Kopplungsstruktur in genau diesem Zustand (also im 3. Gang) geändert. Wegen der fehlenden Relativdrehzahl der Bauteile des Eingangskorbs kann dies mit den vergleichsweise einfachen Klauenkupplungen 12, 13 erfolgen.

Der Planetensatz 5 überträgt zu diesem Zeitpunkt kein Antriebsmoment, nur das Reibmoment der offenen Lamellenkupplung 15 (Pumpenkupplung) liegt an. Diese kleinen Momente begünstigen jedoch den schnellen Schaltvorgang, da Verzögerungen durch Kopf - an - Kopf liegende Schaltelemente der Klauenkupplungen ausgeschlossen werden.

Die Klauenkupplungen 12, 13 sind dabei so ausgeführt, wie sie auch bei Schaltgetrieben üblich sind. Im Vergleich zu den Lamellenkupplungen sind Klauenkupplungen einfache und billige Bauteile. Außerdem müssen diese nur geöffnet und geschlossen werden, so dass anders als bei den Lamellenkupplungen keine exakte Ansteuerung eines zeitlichen Verlaufs des Betätigungsdrucks während des gesamten Schaltvorgangs notwendig ist.

In Figur 2 ist die Kupplungsstruktur des Planetensatzes 5 für den ersten und zweiten Gang exemplarisch dargestellt. Die erste Klauenkupplung 12 verbindet dazu den Getriebeeingang 14, also den Antrieb des Getriebes mit dem Hohlrad 16 des Planetensatzes 5. Der Steg 17 des Planetensatzes 5 ist über die zweite Klauenkupplung 13 mit dem Getriebeausgang 11, also dem Abtrieb, verbunden. Wird in dem Fahrzustand des ersten oder zweiten Ganges, bei dem die Lamellenbremse 10 und die Lamellenkupplung 15 geschlossen sind, die Durchgangskupplung 7 geschlossen und dann die Lamellenkupplung 15 geöffnet, so erfolgt eine direkte Verbindung des Getriebeeingangs 14 mit dem Getriebeausgang 11. In diesem Zustand (dritter Gang) laufen die Teile des Planetensatzes 5 ohne Relativbewegung zueinander um, wie oben bereits erwähnt. Durch Hebelelemente 19, welche durch einen Aktuator 20 angesteuert werden, lassen sich in diesem Zustand die Klauenkupplungen 12, 13 einfach schalten. Dazu wird der Aktuator 20 betätigt und die Hebelelemente 19 verschieben die Klauenkupplungen 12, 13 in deren zweite Position. Diese zweite Position für den vierten Gang und eine Übersetzung ins Schnelle ist in Figur 3 näher dargestellt. Der Aufbau entspricht im Wesentlichen dem der Figur 2, nur dass hier der Getriebeeingang 14 durch die erste Klauenkupplung 12 mit dem Steg 17 des Planetensatzes 5 verbunden ist, während das Hohlrad 16 durch die zweite Klauenkupplung 13 mit dem Getriebeausgang 11, also dem Abtrieb, verbunden ist. Durch schließen der Lamellenkupplung 15 und öffnen der Durchgangskupplung 7 wird dann der vierte Gang aktiviert.

Der Aktuator 20 kann dabei als pneumatischer, hydraulischer, elektrischer oder magnetischer Aktuator ausgebildet sein. Im hier dargestellten bevorzugten Ausführungsbeispiel ist ein hydraulischer oder pneumatischer Aktuator exemplarisch angedeutet. Dieser ist einseitig ausgeführt und arbeitet gegen ein Federelement 21, welches, wie in Figur 3 ersichtlich ist, in dem dort dargestellten Zustand gespannt ist. Der Aktuator 20 kann in dem hier dargestellten Ausführungsbeispiel durch einfaches Beaufschlagen mit einem Arbeitsmedium betätigt werden. Bei in einem Automatgetriebe ohnehin vorhandenen Lamellenkupplungen kann dies beispielsweise das Hydrauliköl sein, welches auch zum Ansteuern der Lamellenkupplungen verwendet wird. Entgegen der Ansteuerung der Lamellenkupplungen ist bei der Ansteuerung des Aktuators 20 jedoch kein Druckprofil notwendig, welches eine exakte Steuerung des Betätigungsdrucks der Kupplungen über den zeitlichen Verlauf des Schaltvorgangs erfordert. Bei den Klauenkupplungen 12, 13 reicht die Beaufschlagung mit einem konstanten Druck, also ein rein digitales Einbeziehungsweise Ausschalten derselben. Grundsätzlich wäre natürlich denkbar, dass beide Schaltrichtungen durch einen solchen Aktuator ausgeführt werden, es ist jedoch hinsichtlich Steuerungsaufwand, Leitungsführung und Bauraum zu bevorzugen, wenn der Aktuator 20 gegen das Federelement 21 wirkt, welches diesen bei Wegfall der Druckbeaufschlagung einfach zurückstellt.

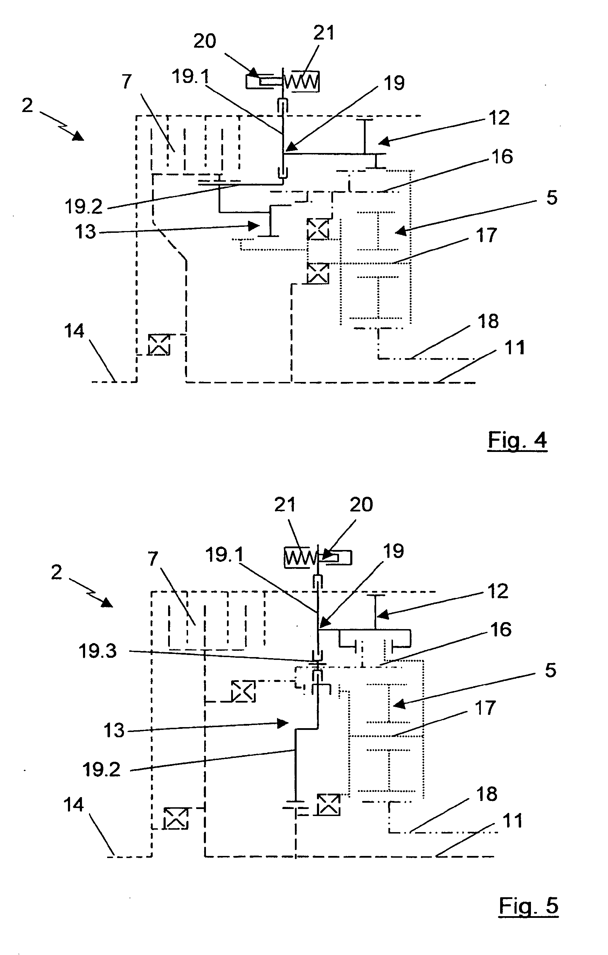

In Figur 4 ist der Aufbau mit der Ansteuerung der Klauenkupplungen 12, 13 über die Hebelelemente 19 nochmals in einer ersten Ausführungsvariante im Detail dargestellt. Zur besseren Übersicht sind die einzelnen Elemente des Eingangsbereichs 2 des Automatgetriebes 1 dazu mit verschiedenen Strichen gekennzeichnet. So ist der vom Getriebeeingang 14 kommende Antriebsbereich in einer kurzgestrichelten Linie ausgeführt, der zum Getriebeausgang 11 führende Abtriebsbereich in einer langgestrichelten Linie. Im Planetensatz 5 ist die Sonne 18 strichzweipunktiert dargestellt, das Hohlrad 16 strichpunktiert. Der Steg 17 des Planetensatzes 5 mit den entsprechenden Planeten ist punktiert dargestellt. Der Aktuator 20 sowie das Hebelelement 19 und die Klauenkupplungen 12, 13 sind in durchgezogener Linie dargestellt. Diese Art der Darstellung erstreckt sich auch auf die nachfolgenden Figuren 5 bis 7.

Das Hebelelement 19 in Figur 4 ist in zwei Teilelemente 19.1 und 19.2 aufgeteilt. Das Teilelement 19.1 des Hebelelements 19 ist dabei mit der ersten Klauenkupplung 12 verbunden und aus dem Eingangsbereich 2 des Automatgetriebes 1 herausgeführt. In diesem herausgeführten Bereich greift der Aktuator 20 an dem Teilelement 19.1 des Hebelelementes 19 an. Das Teilelement 19.1 wird dabei mit umlaufen, so dass eine Ausgestaltung als sich in radialer Richtung erstreckende Ringscheibe möglich wäre. An dieser aus dem Eingangsbereich 2 herausgeführten Ringscheibe kann dann der Aktuator 20 mit einer entsprechenden Führung beispielsweise einer kunststoffbeschichteten Gabelführung angreifen. Das Teilelement 19.1 kann durch diese Gabelführung in radialer Richtung drehbeweglich mit geringer Reibung laufen. In den beiden Endlagen der Hebelelemente 19 kann in besonders vorteilhafter Weise eine komplette Trennung und damit ein reibungsfreies Laufen der Reibflächen realisiert werden. Dies kann beispielsweise über eine entsprechende - an sich bekannte - Gestaltung der Klauen der Klauenkupplungen 12, 13 mit geeigneten Hinterschneidungen erreicht werden, oder durch kleine Federelemente, z.B federbelastete Kugeln mit entsprechenden Nuten in der Gegenfläche, welche die Klauen zum Abschluss der Bewegung selbsttätig um eine kleine Strecke in ihre Endstellung bewegen. Die mit den Klauenkupplungen 12, 13 verbundene Teilelemente 19.1 und 19.2 der Hebelelemente 19 werden dadurch ebenfalls um eine kleine Wegstrecke bewegt. Bei entsprechender Ausgestaltung dieser kleinen Wegstrecken können so die Reibflächen der Gabelführungen und Verbindungen zwischen den Teilelementen 19.1 und 19.2 sowie dem Aktuator 20 berührungslos und reibungsfrei umlaufen. Bei Betätigung des Aktuators 20 wird dennoch sichergestellt, dass das Teilelement 19.1 des Hebelelementes 19 in axialer Richtung verschoben wird. Um ein Verkippen zu verhindern, können auch mehrere Aktuatoren 20, beispielsweise zwei oder drei Aktuatoren, um den Umfang des Eingangsbereichs 2 verteilt angeordnet sein, welche gleichwirkend auf das Teilelement 19.1 des Hebelelementes 19 einwirken.

Das Teilelement 19.1 des Hebelelementes 19 betätigt direkt die Klauenkupplung 12, welche einerseits mit dem Eingangsbereich 14 des Getriebes 1 in Verbindung steht und andererseits diesen entweder mit dem Hohlrad 16 oder dem Steg 17 verbinden kann. In der vorliegenden Darstellung ist eine Neutralstellung der Klauenkupplung gewählt, bei der diese sich zwischen den beiden Verbindungsmöglichkeiten befindet.

Das Hebelelement 19 weist außerdem ein zweites Teilelement 19.2 auf, welches durch eine Übergabestelle mit dem Teilelement 19.1 verbunden ist. Die Übergabestelle kann dabei in derselben Art ausgeführt sein, wie die Ansteuerung des Teilelementes 19.1 durch die Aktuatoren, also beispielsweise durch eine Gabelführung mit entsprechenden Kunststoffbacken zur Verminderung der Reibung. Das Teilelement 19.2 befindet sich bei dem Aufbau gemäß Figur 4 dabei in dem Bereich, in dem keine Relativbewegungen der Teilelemente untereinander auftreten, während die Klauenkupplungen 12, 13 betätigt werden. Durch die fehlende Relativdrehung (nur) beim Schaltvorgang kann diese Drehdurchführung besonders einfach aufgebaut sein. In den Endstellung der Klauenkupplungen 12, 13 sollte dabei dann die oben bereits erläuterte Trennung der Reibflächen der Drehdurchführung erfolgen. Das Teilelement 19.2 kann aufgrund der fehlenden Relativbewegung als einfaches Hebelelement ausgeführt sein. Es ist mit der zweiten Klauenkupplung 13 verbunden. Diese verbindet den Abtrieb beziehungsweise Getriebeausgang 11 einerseits und entweder dem Hohlrad 16 oder dem Steg 17 des Planetensatzes 5 andererseits. Auch diese Kupplung 13, welche durch das Teilelement 19.2 zusammen mit dem Teilelement 19.1 und der anderen Kupplung 12 bewegt wird, ist in der Darstellung gemäß Figur 4 in einer Neutralstellung gezeichnet.

Die Maße und die Toleranzen der Hebelelemente 19 , der Klauenkupplungen 12, 13 und der Übergabestellen bzw. Drehdurchführungen zwischen den Teilelementen 19.1 und 19.2 sowie dem Aktuator 20 definieren die Schaltlogik der beiden Klauenkupplungen 12, 13. Für den beschriebenen Einsatzfall müssen zuerst beide der Klauenkupplungen 12, 13 öffnen und dann deutlich und eindeutig nacheinander in der jeweils anderen Stellung schließen, um ein sicheres und zuverlässiges Ändern der Kopplungsstruktur zu gewährleisten. Durch eine geeignete mechanische Auslegung kann diese Schaltlogik daher absolut zuverlässig sichergestellt werden. Aufgrund der Integration der Schaltlogik in die mechanische Kopplung können Unsicherheiten, wie z.B. durch eine getrennte Ansteuerung der beiden Klauenkupplungen, vollständig eliminiert werden.

In Figur 5 ist ein vergleichbarer Aufbau dargestellt, bei dem das Hebelelement 19 und die Kupplungen 12, 13 geringfügig anders ausgeführt sind. Ansonsten ist die Logik und die Darstellung der einzelnen Elemente dieselbe wie in Figur 4. Es ist zu erkennen, dass das Hebelelement 19 hier in zwei Teilelemente 19.1 und 19.2 aufgeteilt ist, welche wiederum über ein Verbindungselement 19.3, welches ebenfalls ein Teilelement des Hebelelementes 19 ist, miteinander verbunden sind. Das Verbindungselement 19.3 ist hier als doppelte Drehdurchführung realisiert. Dieser Aufbau macht das Hebelelement 19 in seiner Gesamtheit etwas komplexer, ermöglicht jedoch durch die Drehdurchführung mit dem Teilelement 19.3 einen vereinfachten Aufbau des Planetensatzes 5, da bei der Ausgestaltung der Lagerstellen für denselben eine deutlich höhere Freiheit herrscht und diese hinsichtlich der optimalen Ausnutzung von Bauraum bei der Auslegung des Getriebes 1 ein entscheidender Vorteil sein kann. Auch hier werden durch das Hebelelemente 19 beide Klauenkupplungen 12, 13 gleichermaßen bewegt. Die erste Klauenkupplung 12 verbindet auch hier wieder den Getriebeeingang 14 entweder mit dem Hohlrad 16 oder dem Steg 17, während die zweite Klauenkupplung 13 den Getriebeausgang 11 mit dem Steg 17 oder dem Hohlrad 16 verbindet. Auch hier ist wieder eine Neutralstellung dargestellt, bei welcher sich keine der Kupplungsklauen 12, 13 im Eingriff befindet. Die Kupplungsklauen 12, 13 sind bei dieser Ausführungsform radial ausgerichtet.

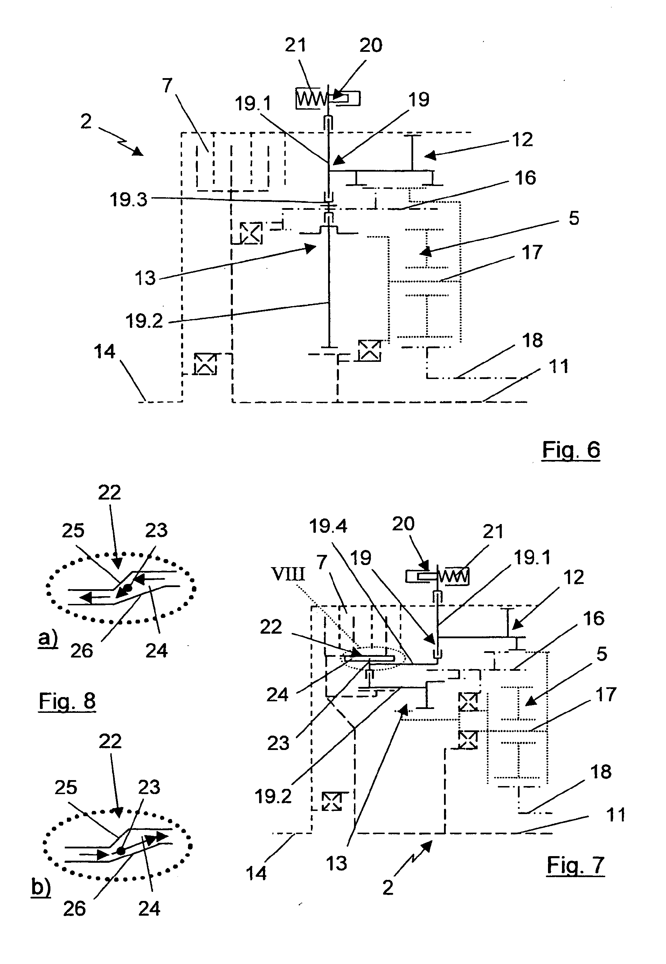

In Figur 6 ist ein vergleichbarer Aufbau nochmals dargestellt. Im Gegensatz zum Aufbau in Figur 5 ist der einzige Unterschied hier, dass die Klauenkupplungen 12, 13 wiederum axial ausgerichtet sind, ansonsten ist der Aufbau mit den drei Teilelementen 19.1, 19.2, 19.3 des Hebelelementes 19 dem in Figur 5 in etwa vergleichbar.

Die Funktionalität und die konstruktive Ausgestaltung der Hebelelemente 19 kann also relativ flexibel an jede beliebige Art von Klauenkupplungen 12, 13 angepasst werden und es könnten beliebige Ausgestaltungen und Aufteilungen der Hebelelemente 19 in einzelne Teilelemente 19.1, 19.2, 19.3 - auch mehr als drei Teilelemente - erfolgen. Dies erlaubt einen vergleichsweise flexiblen und dennoch kompakten Aufbau des Automatgetriebes 1 mit der erfindungsgemäßen Ansteuerung der Klauenkupplungen 12, 13 durch das Hebelelement 19.

In den dargestellten Beispielen laufen die Klauenkupplungen 12, 13 mechanisch gekoppelt und axial gleichsinnig. Durch eine Ausgestaltung der Hebelelemente 19 mit einem Drehpunkt, könnte selbstverständlich auch eine axial gegensinnige mechanisch gekoppelte Bewegung der Klauenkupplungen 12, 13 erreicht werden. Je nach Anforderungen kann so ggf. eine vereinfachte Gestaltung der Klauenkupplungen 12, 13 möglich sein.

Figur 7 greift nochmals die Darstellung der Figur 4 auf. Die Funktionalität ist im Wesentlichen dieselbe wie in Figur 4, so dass hierauf nicht nochmals näher eingegangen wird. Der entscheidende Unterschied zur der Darstellung in Figur 4 ist eine Synchronisiereinheit 22, welche hier im Bereich der Durchgangskupplung 7 angeordnet ist. Dies umfasst eine Gegenelement 23, beispielsweise ein runder Stift, welches in einer Kulisse 24 läuft. Das Hebelelement 19 beziehungsweise dessen Teilelement 19.2 ist dabei mit dem Stift 23 versehen. Der Stift 23 läuft in der Kulisse 24, welche durch die Form der Kulissenführung 24 in bestimmten Fällen eine Synchronisierung ermöglicht.

Der mit Punkten umrandete Bereich VIII ist in Figur 8 nochmals in einer Draufsicht, also in der Sicht in Richtung des Stiftes 23, in zwei Zuständen a) und b) dargestellt. Die vergrößerte Darstellung der Figur 8 zeigt die Kulissenführung 24 und den Stift 23 sowie Pfeile, die anzeigen, wie sich der Stift in der Darstellung gemäß Figur 8 a) durch die Kraft des rückstellenden Federelementes 21 bewegt. Typischerweise wird aufgrund der fehlenden Relativdrehzahl der Bauteile untereinander eine einfache und effiziente Bewegung möglich sein. Falls jedoch die Rückstellung durch das Federelement 21 erfolgt, wenn die Teile noch in Relativbewegung zueinander sind, beispielsweise beim Ausfall des Aktuators 20, so wird der Stift 23 bei der in Figur 8 a) dargestellten Varianten im Bereich einer relativ steilen Schräge 25 anstoßen. Bei einer Relativdrehzahl zwischen dem Abtrieb 11 und dem Antrieb 14 entstehen in der Drehdurchführung zwischen den Teilelementen 19. 1 und 19. 4 Reibkräfte, wenn der Stift 23 an der Schräge 25 ansteht. Diese Reibkräfte verhindern eine entgegengesetzte Verdrehung des Teilelements 19. 4, drücken dadurch den Stift 23 in der Darstellung der Figur 8a nach oben und verhindern somit eine axiale Bewegung des Stifts 23 entlang der Schräge 25. Erst wenn nahezu keine Relativdrehzahl mehr vorhanden ist, kann der Stift 23 an der Schräge 25 entlang gleiten.

Erst wenn sich die Drehzahlen des Getriebeausgangs 11 und des Getriebeeingangs 14 aneinander annähern, kommt es also zu einem Verdrehen der beiden Elemente 23 und 24 zueinander, so dass der Stift 23 entlang der steilen Schräge 25 weiter durch die Kulissenführung 24 laufen kann. Die Synchronisierungseinheit 22 ermöglicht so also eine Synchronisierung speziell im Notfall, wenn durch die Federelemente 21 eine Rückstellung des Hebelelementes 19 und der Kupplungen 12, 13 erfolgt, wenn die Schaltbedingungen noch nicht optimal sind.

In der Gegenrichtung weist die Kulissenführung 24 wie in Figur 8 b) zu erkennen eine deutlich flachere Schräge 26 auf. In diese Richtung erfolgt also eine geringere Anforderung an die Synchronisierung, da diese Richtung jedoch von dem Aktuator 20 aktiv geschaltet wird und dies typischerweise nicht im "Notfall" auftritt, ist dieser Effekt gewünscht.

Neben dieser in den Figuren 7 und 8 dargestellten Notfallsynchronisierung muss für die Klauenkupplungen 12, 13 an sich keine weitere Synchronisierung vorgesehen werden. Es ist jedoch durchaus denkbar, dass die Klauenkupplungen dennoch mit Synchronisierungseinrichtungen versehen werden. Hierfür können dann Synchronisierungseinrichtungen eingesetzt werden, welche aus dem Bereich der Schaltgetriebe bekannt und üblich sind.

## Patentansprüche

1. Automatgetriebe mit
wenigstens einem Planetensatz (15), und mit
einen parallel zu diesem Planetensatz (5) verlaufenden Weg der Drehmomentübertragung,
**dadurch gekennzeichnet, dass**
dieser Planetensatz (5) in einer Gangstufe des Getriebes (1), in welcher der Kraftfluss ohne Über- oder Untersetzung verläuft, ohne Relativdrehzahl seiner Bauteile (16, 17, 18) umläuft und nicht zur Drehmomentübertragung genutzt wird, wobei
in dieser Gangstufe die Kopplungsstruktur dieses Planetensatzes (5) über Klauenkupplungen (12, 13) veränderbar ist, welche über Hebelelemente (19) betätigbar sind.

2. Automatgetriebe nach Anspruch 1, **dadurch gekennzeichnet, dass** die Hebelelemente (19) jeweils aus mehreren Teilelementen (19.1, 19.2, 19.3, 19.4) aufgebaut sind, welche so miteinander verbunden sind, dass sie in axialer Richtung des Getriebes (1) Kräfte untereinander übertragen, und relativ zueinander um eine Achse drehbeweglich untereinander ausgebildet sind.

3. Automatgetriebe nach Anspruch 1 oder 2, **dadurch gekennzeichnet, dass** die Hebelelemente (19) aus einem Eingangsbereich (2) des Getriebes (1) herausgeführt sind.

4. Automatgetriebe nach einem der Ansprüche 1 bis 3, **dadurch gekennzeichnet, dass** die Hebelelemente (19) über Aktuatoren (20) betätigbar sind.

5. Automatgetriebe nach einem der Ansprüche 1 bis 4, **dadurch gekennzeichnet, dass** die Rückstellung der Klauenkupplungen (12,13) durch Federelemente (21) realisiert ist.

6. Automatgetriebe nach Anspruch 5, **dadurch gekennzeichnet, dass** die Federelemente (21) Im Bereich der Hebelelemente (19) angeordnet sind, und die Klauenkupplungen (12, 13) durch die Federelemente (21) über die Hebelelemente (19) zurückstellbar sind.

7. Automatgetriebe nach einem der Ansprüche 1 bis 6, **dadurch gekennzeichnet, dass** jeweils wenigstens zwei Klauenkupplungen (12, 13) durch ein Hebelelement (19) betätigbar sind.

8. Automatgetriebe nach einem der Ansprüche 1 bis 7, **dadurch gekennzeichnet, dass** eine Synchronisierungseinrichtung (22) vorgesehen ist, durch welche beim Vorliegen einer Drehzahldifferenz zwischen den über die Klauenkupplungen (12, 13) zu verbindenden oder zu trennenden Teile eine Verringerung der Drehzahldifferenz erfolgt.

9. Automatgetriebe nach Anspruch 8, **dadurch gekennzeichnet, dass** die Synchronisierungseinrichtung (22) eine Kulissenführung (24) und einen darin laufendes Gegenelement (Stift 23) aufweist, wobei sich die Kulissenführung (24) in axialer Richtung des Getriebes (1) erstreckt, wobei entweder die Kulissenführung (24) oder das Gegenelement (Stift 23) drehfest mit einem ersten Teil, dessen Drehzahl beeinflusst werden soll, verbunden ist, wobei das andere der Elemente (23, 24) mit einem Verbindungselement (19.4) der beiden Klauenkupplungen (12, 13) verbunden ist, und wobei die Kulissenführung (24), so ausgebildet ist, dass eine ungehinderte Bewegung des Gegenelements (Stift 23) in axialer Richtung durch die Kulissenführung (24) nur erfolgen kann, wenn die beiden Elemente (23, 24) gegeneinander verdreht sind.

10. Automatgetriebe nach Anspruch 9, **dadurch gekennzeichnet, dass** die Kulissenführung (24) in die eine axiale Richtung ein anderes Profil (25, 26) aufweist, als in die andere axiale Richtung.

11. Automatgetriebe nach einem der Ansprüche 1 bis 10, **dadurch gekennzeichnet, dass** die Klauenkupplungen (12, 13) über die Hebelelemente (19) direkt oder über Zwischenelemente so mechanisch mit einander verbunden sind, dass die Klauenkupplungen (12, 13) zumindest in einer Richtung ihrer Betätigung in einer vorgegebenen Reihenfolge zueinander schalten.

## Claims

1. An automatic transmission having at least one planetary gear set (15), and having a path of the torque transmission running parallel to said planetary gear set (5), **characterised in that** said planetary gear set (5) in a gear ratio of the transmission (1), in which the power flux circulates without gear increase or reduction ratio, rotates without relative rotational speed of its components (16,17,18) and is not used for torque transmission, whereas in this gear ratio the coupling structure of said planetary gear set (5) can be changed via claw couplings (12,13), which can be operated via lever elements (19).

2. An automatic transmission according to claim 1, **characterised in that** the lever elements (19) respectively consist of several partial elements (19.1, 19.2, 19.3,19.4), which are connected to each other in such a way that they transmit forces among each other in the axial direction of the transmission (1) and are designed rotatably about an axis relative to one another.

3. An automatic transmission according to claim 1 or 2, **characterised in that** the lever elements (19) are deployed from an inlet area (2) of the transmission (1).

4. An automatic transmission according to one of the claims 1 to 3, **characterised in that** the lever elements (19) can be operated via actuators (20).

5. An automatic transmission according to one of the claims 1 to 4, **characterised in that** the claw couplings (12,13) are reset by spring elements (21).

6. An automatic transmission according to claim 5, **characterised in that** the spring elements (21) are arranged in the area of the lever elements (19), and the claw couplings (12,13) can be reset by the spring elements (21) via the lever elements (19).

7. An automatic transmission according to one of the claims 1 to 6, **characterised in that** respectively at least two claw couplings (12,13) can be operated via a lever element (19).

8. An automatic transmission according to one of the claims 1 to 7, **characterised in that** a synchronisation device (22) is provided through the differential rotational speed is reduced in the presence of a differential rotational speed between the parts to be linked or to be separated via the claw couplings (12,13).

9. An automatic transmission according to claim 8, **characterised in that** the synchronisation device (22) includes a sliding block guide (24) and a mating element (pin 23) running therein, whereas the sliding block guide (24) extends in the axial direction of the transmission (1), whereas either the sliding block guide (24) or the mating element (pin 23) is connected in a torque-proof manner with a first part whose rotational speed should be influenced, whereas the other of the elements (23, 24) is connected to a connection element (19.4) of both claw couplings (12,13) and whereas the sliding block guide (24) is designed in such a way that the movement of the mating element (pin 23) can only take place unimpeded in the axial direction through the sliding block guide if both elements (23,24) are rotated against one another.

10. An automatic transmission according to claim 9, **characterised in that** the sliding block guide (24) exhibits another profile (25, 26) in one axial direction than in the other axial direction.

11. An automatic transmission according to one of the claims 1 to 10, **characterised in that** the claw couplings (12,13) are mechanically connected to one another via the lever elements (19) directly or via intermediate elements in such a way that the claw couplings (12,13) engage into one another in a preset sequence at least in the direction of their actuation.

## Revendications

1. Transmission automatique comprenant au moins un engrenage planétaire (15), et un circuit de transmission de couple de rotation qui est parallèle audit engrenage planétaire (5), **caractérisée en ce que** cet engrenage planétaire (5) dans un rapport d'engrenage de transmission (1), dans lequel le flux de puissance s'effectue sans multiplication ni démultiplication, tourne sans vitesse de rotation relative de ses composants (16,17,18) et ne sert pas à la transmission de couple de rotation, alors que dans ce rapport d'engrenage la structure d'accouplement dudit engrenage planétaire (5) peut être modifiée par des embrayages à griffes (12,13), qui peuvent être sollicités par le biais d'éléments de levier (19).

2. Transmission automatique selon la revendication 1, **caractérisée en ce que** les éléments de levier (19) sont respectivement constitués de plusieurs sous-éléments (19.1,19.2,19.3,19.4), qui sont connectés entre eux de façon à transmettre des forces les uns aux autres dans la direction axiale de la transmission (1) et à être mobile en rotation les uns vis-à-vis des autres autour d'un axe.

3. Transmission automatique selon la revendication 1 ou 2, **caractérisée en ce que** les éléments de levier (19) sont déployés à partir d'une zone d'entrée (2) de la transmission (1).

4. Transmission automatique selon l'une des revendications 1 à 3, **caractérisée en ce que** les éléments de levier (19) peuvent être sollicités par des actionneurs (20).

5. Transmission automatique selon l'une des revendications 1 à 4, **caractérisée en ce que** les embrayages à griffes (12,13) sont ramenés en position de départ par des éléments élastiques (21).

6. Transmission automatique selon la revendication 5, **caractérisée en ce que** les éléments élastiques (21) sont disposés dans la zone des éléments de levier (19) et les embrayages à griffes (12,13) peuvent être ramenés en position de départ par les éléments élastiques (21) par le biais des éléments de levier (19).

7. Transmission automatique selon l'une des revendications 1 à 6, **caractérisée en ce que** respectivement au moins deux embrayages à griffes (12,13) peuvent être sollicités par un élément de levier (19).

8. Transmission automatique selon l'une des revendications 1 à 7, **caractérisée en ce qu'**un dispositif de synchronisation (22) est prévu pour réduire la différence de vitesse de rotation en présence d'une différence de vitesse de rotation entre les pièces à relier ou à séparer par le biais des embrayages à griffes (12,13).

9. Transmission automatique selon la revendication 8, **caractérisée en ce que** le dispositif de synchronisation (22) présente un guide à coulisse (24) et un contre-élément (goupille 23) circulant dans celui-ci, alors que le guide à coulisse (24) s'étend dans la direction axiale de la transmission (1), où soit le guide à coulisse (24) soit le contre-élément (goupille 23) est bloqué en rotation avec une première pièce dans la vitesse de rotation doit être influencée, tandis que l'autre des éléments (23, 24) est relié à un élément de connexion (19.4) des deux embrayages à griffes (12,13) et où le guide à coulisse (24) est conçu de façon à ce que le mouvement du contre-élément (goupille 23) ne puisse s'effectuer sans entraves dans la direction axiale par le biais du guide à coulisse (24) que si les deux éléments (23, 24) sont tournés l'un contre l'autre.

10. Transmission automatique selon la revendication 9, **caractérisée en ce que** le guide à coulisse (24) présente un autre profil (25, 26) dans une direction axiale différente de l'autre direction axiale.

11. Transmission automatique selon l'une des revendications 1 à 10, **caractérisée en ce que** les embrayages à griffes (12,13) sont connectés mécaniquement entre eux par l'intemédiaire des éléments de levier (19) directement ou à l'aide d'éléments intermédiaires de telle sorte que les embrayages à griffes (12,13) s'engrènent les uns dans les autres au moins dans une direction de leur actionnement dans une séquence prédéterminée.
